# EUROPEAN PATENT APPLICATION

(11) **EP 4 438 150 A1**
(43) Date of publication of application: **02.10.2024**
(21) Application number: 23020165.9
(22) Date of filing: 30.03.2023
(51) Int. Cl.: B01D 21/30, C02F 1/00, C02F 9/00, C02F 1/74, C02F 3/06, C02F 3/32, C02F 103/00

(54) **STORMWATER MANAGEMENT SYSTEM FOR URBAN STORAGE AND RECOVERY**

(71) Applicant: Field Factors B.V., 2628 CS Delft (NL)
(72) Inventor: Peña-Kok, Karina, 2628 CS Delft (NL); Kok, Willem Jonathan, 2628 CS Delft (NL); Gallegos, Joshua James, 2628 CS Delft (NL)
(74) Representative: Bedenbecker, Markus

(57) **Abstract**

In order to improve the quality of stormwater, a stormwater management system (1) is adapted to be in fluidic communication between a stormwater source (45) and a well means (95), having a filtration means (20), having at least one stormwater inlet means (40), which is adapted to receive stormwater from the stormwater source (45), at least one influent sump means (5), which is adapted to receive stormwater from the stormwater inlet means (40), to physically and/or chemically treat the stormwater and to output influent-sump-water downstream of the stormwater inlet means (40), a biofiltration means (10), which is adapted to receive at least part of the influent-sump-water from the influent sump (5) means, to physically and/or chemically treat the influent-sump-water and to output biofiltration-water downstream of the influent sump means (5), at least one effluent sump means (15), which is located in the same construction (135) as the influent sump means (5) and which is adapted to receive at least part of the biofiltration-water from the biofiltration means (10), to physically and/or chemically treat the biofiltration-water and to output effluent-sump-water downstream of the effluent sump means (15) to the well means (95), and at least one sensor means (25), and/or at least one control means (30) and/or at least one communication means (35) to sense data, control and receive and/or send data, respectively, representing at least a physical and/or chemical property of and/or in the stormwater, the influent-sump-water, the biofiltration-water, the effluent-sump-water, the stormwater inlet means (40), the influent sump means (5), the biofiltration means (10), and/or the effluent sump means (15).

## Description

The present invention related to a stormwater management system, which is adapted to be in fluidic communication between a stormwater source and a well means.

CN 111592191 A discloses a low-impact-development rainwater quality-based treatment and recycling system. The system comprises a low-impact-development system, a rainwater quality-based collection and treatment system, a rainwater recycling system and a central control system, wherein the central control system is connected with the low-impact-development system, the rainwater quality-based collection and treatment system and the rainwater recycling system. The rainwater quality-based collection and treatment system is connected with the low-impact-development system. The low-impact-development system and the rainwater quality-based collection and treatment system are both connected with the rainwater recycling system. While this prior art document describes how to handle rain water in general, it fails to disclose details on how to handle rainwater in form of stormwater. For instance, CN 111592191 A does not disclose a specific technical teaching how to make large quantities of stormwater available for reuse in an urban environment. In particular, it does not explain how to treat seasonally induced variations in quantities and qualities of rainwater and how these can be controlled by a system of treatment and well means.

It is the object of this invention to overcome the deficiency of the prior art as mentioned before.

According to the invention, this object is achieved by a stormwater management system which is adapted to be in fluidic communication between a stormwater source and a well means according to claim 1.

The stormwater management system according to the invention is adapted to be in fluidic communication between at least one, preferably only one, stormwater source and at least one well means. In an advantageous matter it can also include a stormwater reservoir, as will be described in more later below.

The stormwater source is of any suitable kind. In particular, the stormwater source is a stormwater sewage which is fed by rain water, in particular from drainage systems in urban environment such as drain pipes, or drainage ditches.

Also the well means is of any suitable kind. In particular, the well means is an aquifer storage which is at least partially fed by water output from the stormwater management system according to the invention. To this end, the well means can include an infiltration and abstraction well in fluidic communication with the aquifer storage. The water in the well means can be used in any suitable way. In particular, at least part of the water in the well means can be re-circulated to the stormwater management system according to the invention. It shall be noted that the well means can be configured in a number of variations. For instance, the well means could both infiltrate and exfiltrate in one well means or they could be placed in a configuration where the function of infiltration and exfiltration are separated.

The filtration means according to the invention has different components, namely
- at least one stormwater inlet means;
- at least one influent sump means;
- a biofiltration means; and
- at least one effluent sump means:

In detail, the filtration means has at least one stormwater inlet means which is adapted to receive stormwater from the stormwater source. The stormwater inlet means is of any suitable kind. In particular, it is a pipe or duct which is in fluidic communication with the stormwater source. It is thinkable to provide at least one pump to pump stormwater from the stormwater source through said tube into and/or through the stormwater inlet means into the influent sump means. However, it is preferred to provide a connection from the stormwater source to the stormwater inlet means by way of a duct or tube, which allows for gravity induced fluid flow.

The at least one influent sump means is adapted to receive said stormwater from the stormwater inlet means, to physically and/or chemically treat the stormwater and to output the treated stormwater as influent-sump-water downstream of the stormwater inlet means. In other words, once stormwater has entered the influent sump means, it becomes physically and/or chemically treated and leaves the influent sump means as influent-sump-water. The influent sump means is of any suitable kind. In particular, the influent sump means can include one or more compartments which are separated from each other, but in fluidic communication, and which are designed and adapted to store the stormwater for a desired time period or residence time, respectively. Said time period is adapted to allow for a settling of particles in the stormwater within the at least one compartment. However, it is alternatively possible to provide a corresponding influent sump means having one or more compartments which are separated from each other, but in fluidic communication, and which are designed and adapted to store the stormwater independent from a desired time period or residence time, respectively.

The biofiltration means is adapted to receive at least part, preferably all, of the influent-sump-water from the influent sump means, to moderate a saturated zone, physically and/or chemically treat the influent-sump-water and to output said treated influent-sump-water as biofiltration-water downstream of the influent sump means. In other words, once influent-sump-water has entered the biofiltration means, it becomes physically and/or chemically treated and leaves the biofiltration means as biofiltration-water. The biofiltration means is of any suitable kind. In particular, the biofiltration means has a base element, in particular a base plate, which can consist of concrete, and/or a geotextile or any other suitable watertight material. Alternatively, the biofiltration means includes a watertight construction consisting of edge elements, which are held in place on a base plate, and which hold a geotextile or any other suitable watertight material. The edge elements and/or the base plate preferably consist of concrete. On any of said base plates, at least one layer of a filter material, in particular sand, is located. At least in part of the sand, plants can be set. The filter material and the plants are at least partially subject to the influent-sump-water, which is filtered by the filter material and the plants. The biofiltration means can include a number of multiple compartments having different or the same filter materials and/or plants. The biofiltration means is adapted to regulate residence time and hydraulic conductivity of the biofiltration-water. It is adapted to provide for its mechanical screening and to facilitate biodegradation of organic components and nutrients therein. It is furthermore adapted to provide contact time with plants provided in the biofiltration means and to create cyclical redox conditions. Finally, the biofiltration means is adapted to moderate soil moisture control and saturation conditions.

The at least one effluent sump means is adapted to receive at least part of the biofiltration-water from the biofiltration means and to output the biofiltration-water as effluent-sump-water downstream of the effluent sump means to the well means. The effluent sump means can optionally be adapted to physically and/or chemically treat the biofiltration-water. In latter case, once biofiltration-water has entered the effluent sump means, it becomes physically and/or chemically treated and leaves the effluent sump means as effluent-sump-water in the direction of the well means. The effluent sump means is of any suitable kind. In particular, the effluent sump means can include one or more compartments which are separated from each other, but in fluidic communication, and which are designed and adapted to receive the biofiltration-water and to moderate a continuously submerged zone in the effluent sump means. It can be furthermore adapted to control the water level in the biofiltration means.

As will be appreciated from the above, the stormwater becomes physically and/or chemically treated several times before entering the well means. By this, in an advantageous manner high quality water, which is based on stormwater, enters the well means.

According to the invention the influent sump means and the effluent sump means are located in the same construction. The construction is of any suitable kind. In particular, the construction is a building, a housing or a container, in which both the influent sump means and the effluent sump means are accommodated. By this, in an advantageous manner only a minimum of space is required for the filtration means according to the invention.

This is also true, when the at least one sensor means, the at least one control means and/or the at least one communication means are located in the same construction, which can be of any suitable kind. In particular, the construction is a building, a housing or a container. In a particularly advantageous manner, said construction is the same construction in which the influent sump means and/or the effluent sump means are accommodated. By this, only a minimum of space is required for the filtration means according to the invention, and in particular the maintenance of the stormwater management system is further simplified.

According to the invention, the stormwater management system has at least one sensor means which is adapted to sense at least a physical and/or chemical property of and/or in the stormwater, the influent-sump-water, the biofiltration-water, the effluent-sump-water, the stormwater inlet means, the influent sump means, the biofiltration means, and/or the effluent sump means. In particular, a sensor means is adapted to sense data representing in particular electrical conductivity, pH, dissolved oxygen, dissolved organic carbon, nitrate, oils, turbidity, light transmission, water level, aeration, and/or algae representing values.

Alternatively, or cumulatively, the stormwater management system according to the invention has at least one control means which is adapted to control at least a physical and/or chemical property of and/or in the stormwater, the influent-sump-water, the biofiltration-water, the effluent sump-water, the stormwater inlet means, the influent sump means, the biofiltration means, and/or the effluent sump means. In particular, the control means is adapted to control residence time period of the waters in the influent sump means, the biofiltration means and/or the effluent sump means. Alternatively, or cumulatively, the control means is adapted to regulate biofilter feed to the biofiltration means, to regulate the contact time of the biofiltration-water with a root zone for plant uptake and/or to create cyclical redox conditions therein. Furthermore, the control means can be adapted to operate time-dependently, and/or based on volume conditions of the waters and/or actual and/or predicted weather conditions and/or seasonal conditions. Alternatively or cumulatively, the control means is adapted to shut-off any relevant fluid flow and/or to activate any bypass(es) in the stormwater management system according to the invention when contaminants are detected, in particular on the basis of data sensed by the sensors disclosed before, and/or to activate any water pumps on data representing quality conditions of the waters inside and/or outside of the stormwater management system according to the invention.

Furthermore alternatively or cumulatively, the stormwater management system according to the invention has at least one communication means to receive and/or send data representing at least a physical and/or chemical property of and/or in the stormwater, the influent-sump-water, the biofiltration-water, the effluent sump-water, the stormwater inlet means, the influent sump means, the biofiltration means, and/or the effluent the stormwater means. In particular, the communication means is an electronic communication means, in particular telecommunication means, which is adapted to send and/or receive in particular the data disclosed before. For instance, any value sensed by any of the sensor means disclosed before can be send and/or received via the telecommunication means to a computer data bank system, a computer cloud-based storage system or a computer-based calculation system outside of or within the stormwater management system according to the invention.

As will be appreciated from the above, the stormwater, the influent-sump-water, the biofiltration-water, the effluent-sump-water, the stormwater inlet means, the influent sump means, the biofiltration means, and/or the effluent sump means are, if so desired, constantly monitored. If a sensed physical and/or chemical property of the items mentioned before, in particular a corresponding measured value, deviates from a target value, the control means intervenes and adapts the stormwater inlet means, the influent sump means, the biofiltration means, and/or the effluent sump means until the sensed physical and/or chemical property of the items mentioned before essentially correspond to the desired target value. By means of the communication means it is possible to transmit and/or receive and/or exchange data representing the aforementioned measured values of and/or target values within in the stormwater management system and/or outside of it, e.g. to a control room. In consequence, and in an advantageous manner, all sensed physical and/or chemical properties of the stormwater, the influent-sump-water, the biofiltration-water, the effluent sump-water, the stormwater inlet means, the influent sump means, the biofiltration means, and/or the effluent sump means become transparent, can be further processed and transmitted to any interested party or technical means. It goes without saying that the respective values or data, respectively, can be stored in a volatile or non-volatile storage means.

It shall be noted that any sensor means, control means and/or communication means can be located in the influent sump means and/or the effluent sump means. Furthermore, the influent sump means and/or the effluent sump means are adapted to provide for a sewer bypass for contaminated water. By this, it is possible to avoid infiltration of contaminated water to the water in the well means.

In an advantageous embodiment of the invention, at least one particle settling means and/or particle removal means is located in the influent sump means and/or the effluent sump means. By this an even better quality of the water within the stormwater management system can be achieved.

This is also true, when at least one saturated zone control means is provided, which is adapted to adjust for different saturation levels.

This is even more true when, according to an advantageous embodiment of the invention, the particle settling means and/or the particle removal means has at least one channel adapted to facilitate cleaning of the water within the influent sump means and/or the effluent sump means, respectively. Optionally, at least one depressed channel and/or at least one mesh which are adapted to receive particles from water within the influent sump means and/or the effluent sump means, respectively. Alternatively or cumulatively, the particle settling means and/or particle removal means has at least one screen.

According to a further advantageous embodiment, the particle settling means and/or the particle removal means has at least one cleaning means which is adapted to remove particles from the particle settling means and/or the particle removal means. In an advantageous manner, the cleaning means is a drain to the stormwater source, in particular a stormwater sewer. By this it is possible to maintain the stormwater management system if required.

As disclosed before the influent sump means and the effluent sump means are located in the same construction. According to an advantageous embodiment, also the biofiltration means can be part of said construction.

In a further advantageous embodiment of the stormwater management system, the influent sump means and the effluent sump means can be located adjacent to the same side of the biofiltration means, but spaced apart from each other with respect to an axis, in particular the longitudinal axis or the lateral axis, of the biofiltration means. The influent sump means and the effluent sump means can be located in a construction in which said space is provided in between them. The construction is of any suitable kind. In particular, the construction is a building, a housing or a container, in which both the influent sump means and the effluent sump means and are accommodated, as is the space in between them. The space is adapted to receive at least one sensor means, one control means, one communication means, one fluid flow allowing means, in a particular one tube and/or one channel, and/or at least one fluid flow influencing means, in a particular one valve means and/or one pump. The fluid flow allowing means or the fluid flow influencing means is in fluidic communication with the stormwater source, the influent sump means, the biofiltration means, the effluent sump means and/or the well means. Optionally, the space is sized such that a person can enter and handle, maintain and/or replace the aforementioned means contained therein.

In order to further improve the quality of the water within the stormwater management system and ultimately downstream of it, there is provided at least one aerator means which is located in the influent sump means and/or the biofiltration means and/or the effluent swamp means. In a very advantageous manner, at least one aerator means are provided in the biofiltration means. The aerator is adapted to increase oxygen concentration. In particular when the aerator means is located in the biofiltration means, oxygen concentration in the biofilter feed, i.e. the influent-sump-water, is increased. The aerator means is adapted to support iron and co-precipitation of other metals, organics removal, nutrient conversion and distribute water across any desired surface, in particular the surface of the biofiltration means.

According to a further embodiment of the invention, the at least one aerator means is provided with at least one control means to control the aerator means, and/or at least one communication means which is adapted to communicate with at least one of the control means disclosed before.

Alternatively, or cumulatively, there is provided at least one oil separation means in the influent sump means and/or the biofiltration means. Optionally, the effluent swamp means can be provided with at least one oil separation means. According to a further embodiment, the at least one oil separation means is provided with at least one sensor means to sense at least a physical and/or chemical property of the oil separation means, and/or with at least one control means to control the oil separation means, and/or at least one communication means which is adapted to communicate with at least one of the control means disclosed before.

As will be appreciated, the amount of stormwater adapted to enter the stormwater inlet means varies depending in particular on weather conditions. In order to allow for a controlled entry of stormwater in the stormwater inlet means, at least one reservoir, adapted to function as a stormwater buffer, is provided in fluidic communication between the stormwater source and the stormwater inlet means.

According to yet another embodiment of the stormwater management system according to this invention, at least one valve is provided, which is adapted to at least temporarily allow for, by-pass and/or shut-off flow of at least part of the stormwater, part of the influent-sump-water, part of the biofiltration-water, part of the effluent-sump-water and/or other water which are adapted to enter, flow within and/or exit the stormwater management system. By this, the fluid flow of the stormwater and/or any other water entering the stormwater management system, within the stormwater management system and/or leaving it can be controlled. In particular, it is possible to fully or partially close the stormwater entry means, the influent sump means, the biofiltration means and/or the effluent sump means if so desired. Alternatively or cumulatively, additional water pipes, ducts or the like water supply means can be provided, so that extra water, in particular fresh water, can be directed into the influent sump means, the biofiltration means and/or the effluent sump means.

In an advantageous manner, the at least one valve, the at least one sensor means, the at least one control means and/or the at least one communication means are located in the same construction. The construction is of any suitable kind. In particular, the construction is a building, a housing or a container. In a particularly advantageous manner, said construction is the same construction in which the influent sump means and/or the effluent sump means are accommodated. By this, only a minimum of space is required for the filtration means according to the invention, and in particular the maintenance of the stormwater management system is further simplified.

This is particularly true, when the at least one valve, the at least one sensor means, the at least one control means and/or the at least one communication means are located in a space between and outside of the influent sump means and the effluent sump means. In a further advantageous embodiment, the influent sump means and the effluent sump means are located symmetrically to the space.

In order to further enhance the quality and operability of the stormwater management system according to the invention, at least one well means is in fluidic communication with the effluent sump means and forms part of the stormwater management system.

In order to further enhance the quality and operability of the stormwater management system according to the invention even further, the well means is adapted to output water to the filtration means, in particular to the biofiltration means, and/or to a water user means, in particular to a building, and/or to the stormwater source, in particular a stormwater sewer. In other words, the clean water of the well means can be distributed to the filtration means, e.g. to the influent sump means, the biofiltration means and/or the effluent sump means, the water user means and/or the stormwater source, in particular for cleaning or watering purposes, if so desired.

In sum, the following advantages are associated with the invention disclosed before: the stormwater management system attenuates rain events in a way that a compact and nature-based management system design is achieved. Particulate and dissolved contaminants are reliably removed, and flowrates of the waters within in the stormwater management system are moderated such that biofiltration is enhanced. Flowrates for infiltration in alignment with the hydraulic capacities of the receiving well means, oxygen levels in the stormwater for infiltration, redox conditions in the biofiltration means for metal complexation, nutrient and carbon assimilation as well as the conditions for pathogen removal are additionally moderated. Finally, the quality of untreated and treated stormwater is monitored to protect the water going into the well means.

Embodiments according to the invention are further described by the detailed description and the accompanying drawings.

The invention will be explained in more detail with reference to the appended drawings. The drawings show a practical embodiment according to the invention, which may not be interpreted as limiting the scope of the invention, in which
- Fig. 1A: is a block diagram of a first embodiment of the stormwater management system according to the invention;
- Fig. 2B: is a block diagram of an alternative embodiment of the stormwater management system according to the invention;

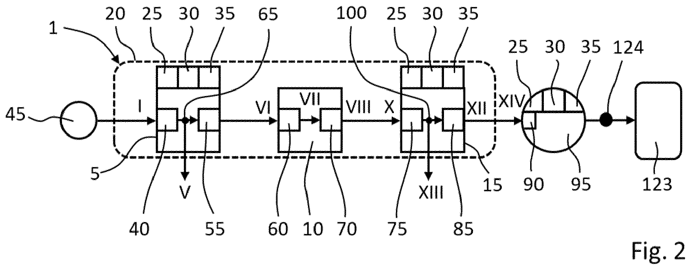

- Fig. 2: is a block diagram of yet another alternative embodiment of the stormwater management system according to the invention;

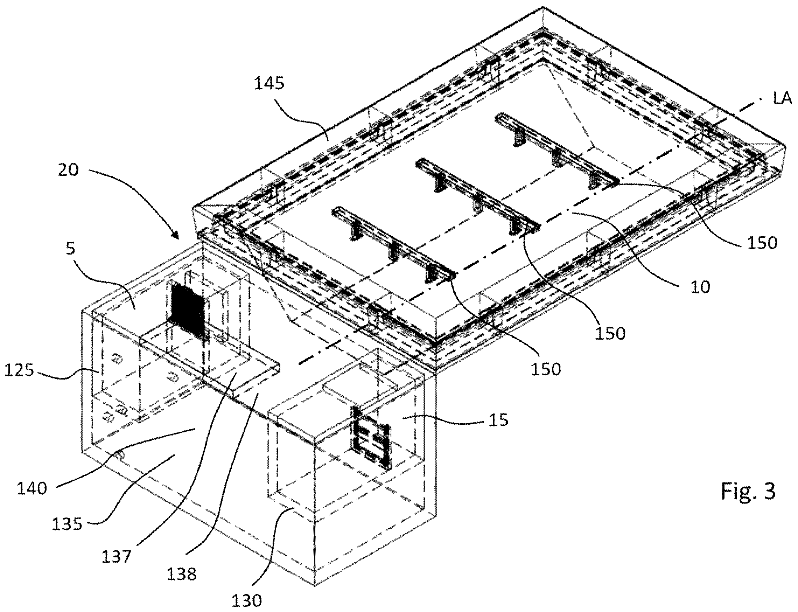

- Fig. 3: is a simplified oblique view of a stormwater management system according to the invention;

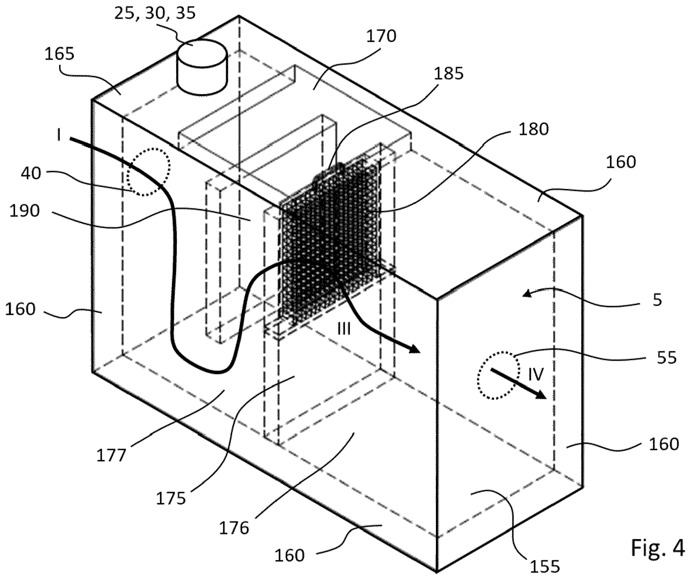

- Fig. 4: is a simplified oblique view of an influent sump means;

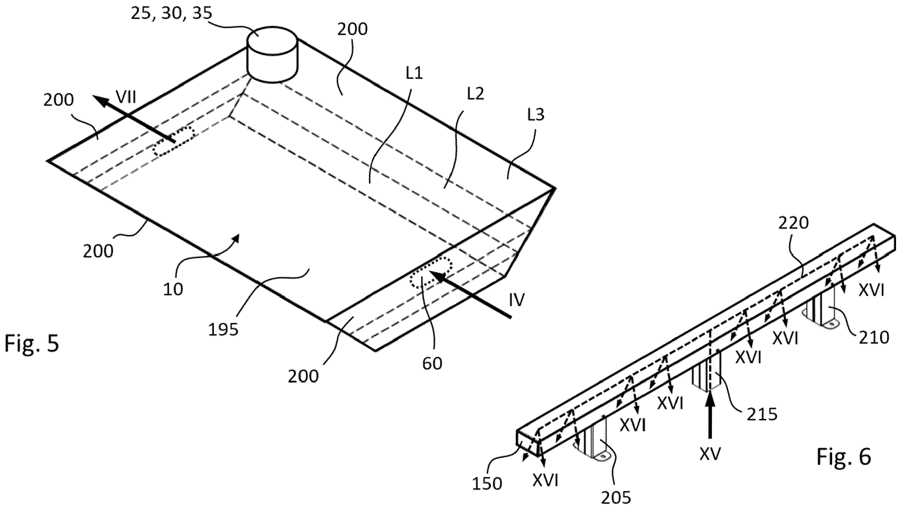

- Fig. 5: is a simplified oblique view of a biofiltration means;
- Fig. 6: is a simplified oblique view of an aerator;

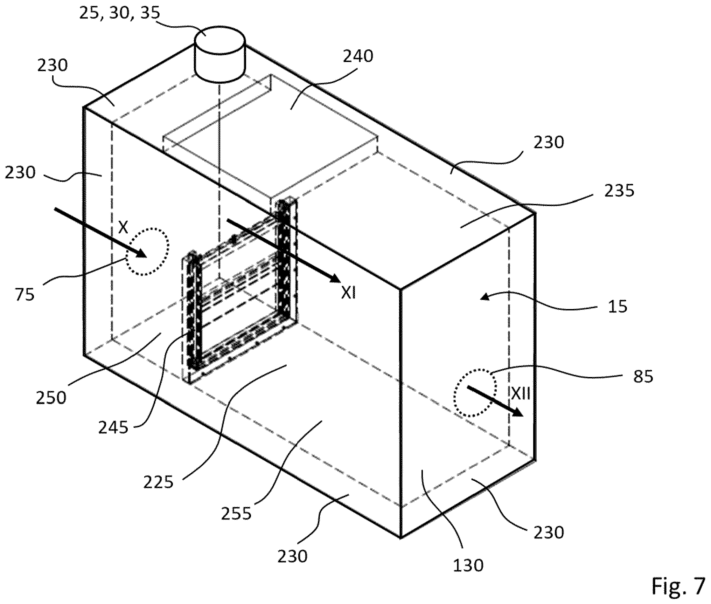

- Fig. 7: is a simplified oblique view of an effluent sump means;

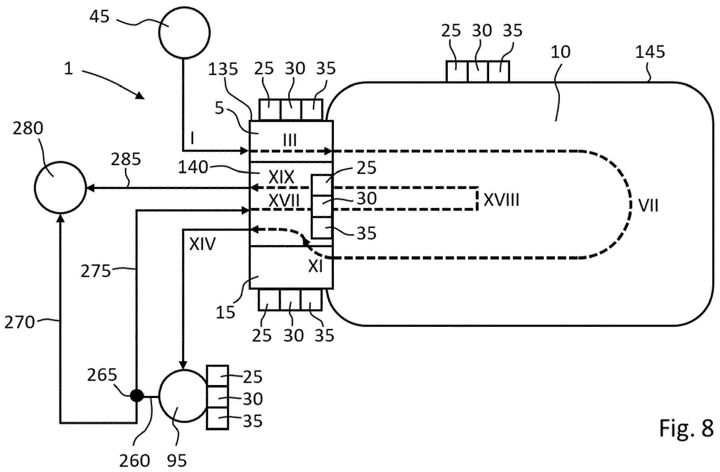

- Fig. 8: is a simplified representation of another embodiment of the stormwater management system according to the invention; and

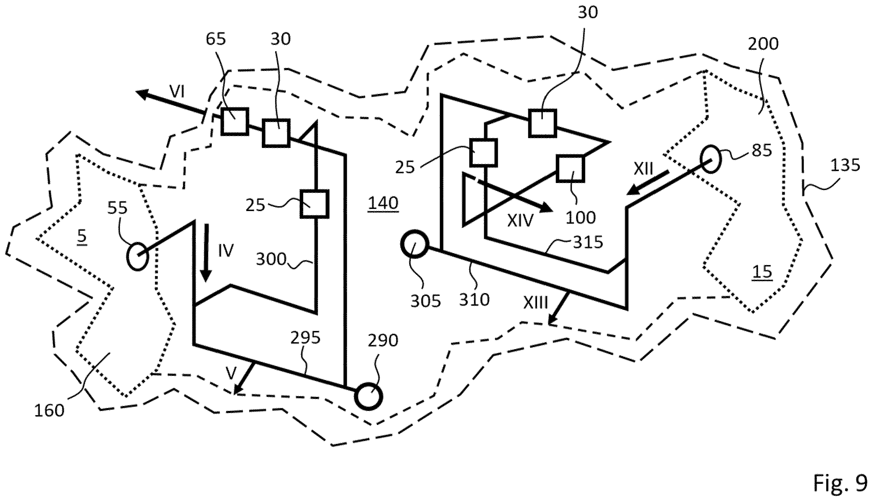

- Fig. 9: is a simplified representation of a construction having a space between an influent sump means and an effluent sump means.

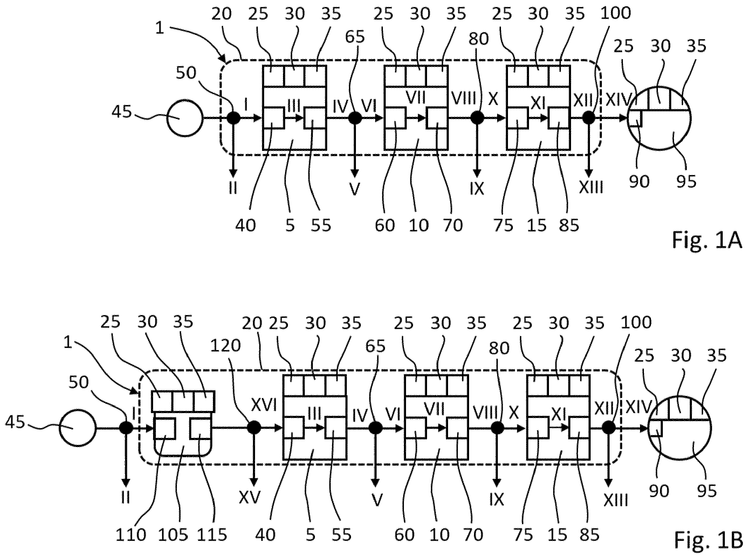

Fig. 1A shows, in symbolic form, a stormwater management system 1, which is composed of an influent sump means 5, a biofiltration means 10 and an effluent sump means 15. The influent sump means 5, the biofiltration means 10 and the effluent sump means 15 form a filtration means 20.

Each of the influent sump means 5, the biofiltration means 10 and the effluent sump means 15 is provided with a sensor means 25, a control means 30 and a communication means 35, respectively.

The influent sump means 5 is provided with a stormwater inlet means 40 which is in fluidic communication with a stormwater source 45. The stormwater source can be a reservoir in form of a pond, canal or the like engineered container. As denoted by arrow I, stormwater can flow from the stormwater sewer 45 through the stormwater inlet means 40, e.g. a pipe, into the influent sump means 5. The quality and/or quantity of the stormwater at a position upstream of the stormwater inlet means 40 is sensed by the sensor means 25 of the influent sump means 5. If said quality and/or quantity deviates from a pre-set value calculated and/or stored in the control means 30, and/or communicated by an external calculation or storage means (not shown in Fig. 1A) via the communication means 35 to the control means 30, the control means 30 reduces the flow from the stormwater sewer 45 to the influent sump means 5 or even shuts-off the stormwater inlet means 40. In this case, a valve means 50, e.g. a two-way valve, is adapted to have undesired stormwater by-pass the stormwater inlet means 40, as is depicted by arrow II. The valve means 50 is in operative connection with the sensor means 25 and the control means 30, which it controls.

It shall be noted that, while a valve means 50 is depicted in Fig. 1A, this can be neglected in a different example of the stormwater management system 1. This example is not represented in a separate figure, as it corresponds to the example shown in Fig. 1A with the exception of the valve means 50 and the corresponding arrow II.

Provided the quality and/or quantity of the stormwater at a position upstream of the stormwater inlet means 40 as sensed by the sensor means 25 of the influent sump means 5 corresponds to the pre-set value mentioned before, it can enter the influent sump means 5 via the stormwater inlet means 40 and is physically and/or chemically treated within the influent sump means 5, as depicted by arrow III and as will be explained below. The physically and/or chemically treated stormwater shall be called influent-sump-water. It exits the influent sump means 5 through an influent-sump-water outlet means 55, e.g. a pipe, which is located downstream of the stormwater inlet means 40, in the direction of an influent-sump-water inlet means 60 of the biofiltration means 10, as represented by arrow IV.

The quality and/or quantity of the influent-sump-water at a position upstream of the influent-sump-water inlet means 60 is sensed by the sensor means 25 of the biofiltration means 10. If said quality and/or quantity deviates from a pre-set value calculated and/or stored in the control means 30, and/or communicated by an external calculation or storage means (not shown in Fig. 1A) via the communication means 35 to the control means 30 of the biofiltration means 10, said control means 30 reduces the flow from the influent-sump-water outlet means 55 to the influent-sump-water inlet means 60, e.g. a pipe, or even shuts-off the influent-sump-water inlet means 60. In this case, a valve means 65, e.g. a two-way valve, is adapted to have the undesired influent-sump-water by-pass the influent-sump-water inlet means 60, as is depicted by arrow V. The valve means 65 is in operative connection with the sensor means 25 and the control means 30 of the biofiltration means 10, which it controls. It shall be noted that the valve means 65 can be located in the influent sump means 5 (not shown in this figure).

It shall be noted, although it is not represented in this figure, that in a different embodiment of the stormwater management system 1 a sensor means 25, a control means 30 and/or a communication means 35 can be neglected.

Provided the quality and/or quantity of the influent-sump-water at a position upstream of the influent-sump-water inlet means 60 as sensed by the sensor means 25 of the biofiltration means 10 corresponds to the pre-set value mentioned before, it can enter the biofiltration means 10 via the influent-sump-water inlet means 60, e.g. a pipe, as is depicted by arrow VI. Said water is moderated in form of a saturated zone in the biofiltration means 10, as depicted by arrow VII and as will be explained below. The physically and/or chemically treated influent-sump-water shall be called biofiltration-water. It exits the biofiltration means 10 through a biofiltration-water outlet means 70, e.g. a pipe, which is located downstream of the influent-sump-water inlet means 60, in the direction of a biofiltration-water inlet means 75, e.g. a pipe, of the effluent sump means 15, as represented by arrow VIII.

The quality and/or quantity of the biofiltration-water at a position upstream of biofiltration-water inlet means 75 is sensed by the sensor means 25 of the effluent sump means 15. If said quality and/or quantity deviates from a pre-set value calculated and/or stored in the control means 30, and/or communicated by an external calculation or storage means (not shown in Fig. 1A) via the communication means 35 to the control means 30 of the effluent sump means 15, said control means 30 reduces the flow from the biofiltration-water outlet means 70 to the biofiltration-water inlet means 75 or even shuts-off the biofiltration-water inlet means 75. In this case, a valve means 80, e.g. a two-way valve, is adapted to have the undesired biofiltration-water by-pass biofiltration-water inlet means 75, as is depicted by arrow IX, such that the by-passing water flows back to the stormwater source 45 for example. The valve means 80 is in operative connection with the sensor means 25 and the control means 30 of the effluent sump means 15, which it controls.

Provided the quality and/or quantity of the biofiltration-water at a position upstream of the biofiltration-water inlet means 75 as sensed by the sensor means 25 of the effluent sump means 15 corresponds to the pre-set value mentioned before, it can enter the effluent sump means 15 via the biofiltration-water inlet means 75, as is depicted by arrow X. Said water is physically and/or chemically treated within the effluent sump means 15, as depicted by arrow XI and as will be explained below. The physically and/or chemically treated biofiltration-water shall be called effluent-sump-water. It exits the effluent sump means 15 through an effluent-sump-water outlet means 85, e.g. a pipe, which is located downstream of the biofiltration-water inlet means 75, in the direction of an effluent-sump-water inlet means 90, e.g. a pipe, of a well means 95, as represented by arrow XII.

It shall be noted that the valve means 80 can be located in the effluent sump means 15 (not shown in this figure).

The quality and/or quantity of the effluent-sump-water at a position upstream of effluent-sump-water inlet means 90 is sensed by the sensor means 25 of the well means 95. If said quality and/or quantity deviates from a pre-set value calculated and/or stored in the control means 30, and/or communicated by an external calculation or storage means (not shown in Fig. 1A) via a communication means 35 to the control means 30 of the well means 95, said control means 30 reduces the flow from the effluent-sump-water outlet means 85 to the effluent-sump-water inlet means 90 or even shuts-off the effluent-sump-water inlet means 90. In this case, a valve means 100, e.g. a two-way valve, is adapted to have the undesired effluent-sump-water by-pass the effluent-sump-water inlet means 90, as is depicted by arrow XI. The valve means 100 is in operative connection with the sensor means 25 and the control means 30 of the well means 95, which it controls.

Provided the quality and/or quantity of the effluent-sump-water at a position upstream of the effluent-sump-water inlet means 90 as sensed by the sensor means 25 of the well means 95 corresponds to the pre-set value mentioned before, it can enter the well means 95 via the effluent-sump-water inlet means 90, as is depicted by arrow XIV. Said water is stored in the well means 95 and can be used as desired.

It shall be noted that the valve means 100 can be located in the effluent sump means 15 or the well means 95 (not shown in this figure).

Fig. 1B shows, in symbolic form, an alternative embodiment of the stormwater management system 1 according to Fig. 1A. The storm water management system 1 according to Fig. 1B basically includes the same elements as the storm water management system according to Fig. 1A. Hence, and for the sake of simplicity, reference is made to the description of Fig. 1A, while the description itself shall not be repeated here.

However, the stormwater management system 1 according to Fig. 1B includes a reservoir 105 downstream of the stormwater sewer 45 and upstream of the influent sump means 5. Specifically, the reservoir 105 is interposed between the valve means 50 and the stormwater inlet means 40. It is provided with a sensor means 25, a control means 30 and a communication means 35, respectively, which are in functional connection with a sensor means 25, a control means 30 and a communication means 35 of the influent sump means 5, the biofiltration means 10 and the effluent sump means 15, respectively. The reservoir 105 has a stormwater inlet means 110, e.g. a pipe, through which storm water can enter the reservoir 105. A stormwater outlet means 115, e.g. a pipe, is provided downstream of the stormwater inlet means 110, which is in fluidic communication with a valve means 120, e.g. a two-way valve. The valve means 120 is furthermore in fluidic communication with the stormwater inlet means 40 of the influent sump means 5.

The quality and/or quantity of the stormwater at a position upstream of the stormwater inlet means 110 is sensed by the sensor means 25 of the reservoir 105. If said quality and/or quantity deviates from a pre-set value calculated and/or stored in the control means 30, and/or communicated by an external calculation or storage means (not shown in Fig. 1A) via the communication means 35 to the control means 30, the control means 30 reduces the flow from the stormwater sewer 45 to the reservoir or even shuts-off the stormwater inlet means 110. In this case, the valve means 50 is adapted to have undesired stormwater bypass the stormwater inlet means 110, as is depicted by arrow II. The valve means 50 is in operative connection with the sensor means 25 and the control means 30, which it controls.

It shall be noted that, while a valve means 50 is depicted in Fig. 1B, this can be neglected in a different example of the stormwater management system 1. This example is not represented in a separate figure, as it corresponds to the example shown in Fig. 1B with the exception of the valve means 50.

Provided the quality and/or quantity of the stormwater at a position upstream of the stormwater inlet means 110 as sensed by the sensor means 25 of the reservoir 105 corresponds to the pre-set value mentioned before, it can enter the reservoir 105 via the stormwater inlet means 110. The reservoir 105 serves as a buffer, where a desired quantity of stormwater can be stored. If desired, the stormwater exits the reservoir 105 a stormwater outlet means 115.

The quality and/or quantity of the stormwater downstream of the stormwater outlet means 115 is sensed by the sensor means 25 of the influent sump means 5. If said quality and/or quantity deviates from a pre-set value calculated and/or stored in the control means 30, and/or communicated by an external calculation or storage means (not shown in Fig. 1B) via the communication means 35 to the control means 30, the control means 30 reduces the flow from the reservoir 105 to the influent sump means 5 or even shuts-off the stormwater inlet means 40. In this case, a valve means 120 is adapted to have undesired stormwater bypass the stormwater inlet means 40, as is depicted by arrow XV. The valve means 120 is in operative connection with the sensor means 25 and the control means 30 of the influent sump means 5, which it controls.

Provided the quality and/or quantity of the stormwater at a position downstream of the stormwater inlet means 40 as sensed by the sensor means 25 of the influent sump means 5 corresponds to the pre-set value mentioned before, it can enter the influent sump means 5 via the stormwater inlet means 40, as depicted by arrow XVI. It will then be physically and/or chemically treated stormwater to become influent-sump-water as described with reference to Fig. 1A and depicted by arrow III.

As will be appreciated from the above, each of the embodiments according to Fig. 1A and Fig. 1B include a sensor means 25, a control means 30 and a communication means 35 for each of the influent sump means 5, the biofiltration means 10, the effluent sump means 15 and the well means 95. By this it is possible to sense, control and communicate within the stormwater management system 1 and/or with external technical devices (not shown) in a very close-knit way.

However, as can be seen from the embodiment of a stormwater management system 1 according to Fig. 2, a smaller number of sensor means 25, control means 30 and communication means 35 can be provided alternatively. Here, only the influent sump means 5, the effluent sump means 15 and the well means 95 are provided with sensor means 25, control means 30 and communication means 35, whereas the biofiltration means 10 is not provided with sensor means 25, control means 30 and communication means 35. Also, only the influent sump means 5 and the effluent sump means 15 are provided with valves means 65, 100, such that fluid can by-pass the biofiltration means 10 and the well means 95, as represented by the arrows V and XI., respectively, while there is no valve means provided in the biofiltration means 10. The well means 95 is in fluidic connection with an additional reservoir 123. Fluid flow between the well means 95 and the reservoir 123 can be permitted, limited or inhibited by a valve means 124, which is controlled by an additional sensor means (not shown in this figure).

While Fig. 1A to Fig. 2 are representations of a stormwater management system 1 in form of block diagrams, Fig. 3 is an isometric view of a filtration system 20 of a stormwater system 1. The influent sump means 5 is designed as a construction 125, while the effluent sump means 15 is designed as a different construction 130. The construction 125 and the construction 130 are separated from each other, but located in a joint construction 135 in such a way that a space 140 is formed in between the construction 125 and the construction 130. Furthermore, the influent sump means 5 and the effluent sump means 15 are located symmetrically to the longitudinal axis LA of the biofiltration means 10.

By means of a hatch 137 in the ceiling 138 of the construction 135, the space 140 can be accessed e.g. for maintenance purposes. The respecting constructions 125, 130 and 135 are made of concrete according to this exemplary embodiment of the invention. The biofiltration means 10 is adjacent to the construction 135 and includes its own construction 145. However, it shall be noted that construction 135 and construction 145 could be provided integrally. Three aerators 150 are equally distributed over the length of the biofiltration means 10 and extend laterally to it, respectively, over a part of its transverse length. As can be seen from Fig. 3, the filtration system 20 only requires little space.

Fig. 4 is a simplified oblique view of the influent sump means 5. As can be seen, the construction 125 is of essentially cuboid shape, having a floor 155 and four sidewalls 160 upwardly extending from said floor 155. The construction 125 is closed by a ceiling element 165, having a hatch 170 such that the construction 125 can be opened for easy access, and can be closed. A container for the sensor means 25, the control means 30 and the communication means 35 of the influent sump means 5 is located on top of the ceiling element 165. It shall be noted, that - although this is not shown in this figure - the sensor means 25, the control means 30 and the communication means 35 of the influent sump means 5 can be located inside the construction 125. In this case, a container does not need to be provided.

Inside of the construction 125 is a first baffle 175 extending from the floor 155 upwards in the direction of the ceiling element 165 and over the entire length of the sidewall 165 in transverse direction of the influent sump means 5, such that the lower part of the influent sump means 5 is divided in two spaces 176, 177 which are fluidically separated from each other. In other words, the first baffle 175 is a wall-like element which divides the lower section of the influent sump means 5 in two pools which are separated from each other. The first baffle 175 is made of the same material as the construction 125. On top of the first baffle 175, and in direct contact with it, is a screen 180 which also extends upwards in the direction of the ceiling element 165 and over the entire length of the sidewall 165 in transverse direction of the influent sump means 5. The screen 180 includes filter material and has a handle 185 such that it can be removed, e.g. for cleaning purposes, and re-installed or replaced. The first baffle 175 and the screen 180 are located downstream of the stormwater inlet means 40, which is only symbolically represented in this Fig. 4, and as can be readily understood from arrow I representing stormwater flowing into the influent sump means 5.

Upstream of the first baffle 175 and the screen 180 is a second baffle 190, which does not extend from the floor 155, but from a distance from it, and upwards in the direction of the ceiling element 165. Other than the first baffle 175 it does not extend over the entire length of the sidewall 165 in transverse direction of the influent sump means 5 but is off-set from on one of the sidewalls 160. The height of the second baffle 190 is larger than the height of the first baffle 175.

As depicted by arrow III, the incoming stormwater is treated in several stages: after entering the second space 177, debris (not shown in this fig.) can settle and accumulate on the floor of the second space 177. When the water level of the stormwater is higher than the height of the first baffle 175, this part of the stormwater flows through the screen 180, is being filtered by the filter material therein and flows into the first space 176. In the first space 176, debris (not shown in this fig.) which was not accumulated in the second space 177 and filtered by the screen 180 can settle and accumulate. The treated water exits the influent sump means 5 via the influent-sump-water outlet means 55 in form of influent-sump-water, as represented by arrow IV.

Fig. 5 is a simplified oblique view of the biofiltration means 10. As can be seen, the biofiltration means 10 has a floor 195 and four sidewalls 200 which extend upwardly from the floor 195, giving the biofiltration means 10 a trough-like form. The floor 195, as well as the sidewalls 200, are covered by a geotextile liner (not shown). The design of the floor 195, the sidewalls 200 and the liner is such that a watertight barrier is obtained. A first layer L1 of filter material (not shown here), which is sand of a particular quality according to this embodiment, covers the floor 195. A second layer L2 of a further filter material (not shown here), which is sand of a particular quality which is different from the quality of the filter material of layer L1, is located on top of the layer L1. A third layer L3 of a further filter material (not shown here), which is sand of a particular quality which is different from the quality of the filter materials of layer L1 and layer L2, is located on top of the layer L2.

Plants (not shown here) are placed on layer L2, having roots which can reach through the material in the second layer L2 to the first layer L1 and the floor 195. Finally, the biofiltration means 10 according to this embodiment includes a container for the sensor means 25, the control means 30 and the communication means 35 of the influent sump means 5. It shall be noted, that - although this is not shown in this figure - the sensor means 25, the control means 30 and the communication means 35 can be located in the edge of the biofiltration means 10. In this case, a container does not need to be provided. Influent-sump-water can enter the biofiltration means 10 via the influent-sump-water inlet means 60, as represented by arrow IV. The influent-sump-water is treated by the filter material in the layers L1, L2 as well as the plants. The treated water passes through horizontally arranged collector pipes (not shown) and exits the biofiltration means 10 via the biofiltration-water outlet means 70 in form of biofiltration water, as represented by arrow VII.

In Fig. 6 an aerator 150 is represented in simplified form. The aerator 150 according to this exemplary embodiment is designed as an overflow aerator and has a first support 205 as well as a second support 210 which can be fastened to the floor 195 of the biofiltration means 10. The two supports 205, 210 are adapted to be height adjustable, e.g. by means of screw adjustors, in order to level the aerator 150 with respect to the floor 195. In between the two supports 205, 210 an inlet pipe 215 is located, which is in fluid communication with the water in the biofiltration means 10. An outlet pipe 220, shown in simplified form, is located downstream of the inlet pipe 215 and in fluid communication with it. It essentially extends over the length of the aerator 150 and has a number of openings (not shown in this fig.), so that the water in the biofiltration means 10 can be transported by a pump (not shown) through the inlet pipe 215, as represented by arrow XV, distributed by means of the outlet pipe 220 over the length of the aerator 150 and sprayed on top of the water in the biofiltration means 10, as represented by the arrows XVI.

Fig. 7 is a simplified oblique view of the effluent sump means 15. As can be seen, the construction 130 is of essentially cuboid shape, having a floor 225 and four sidewalls 230 upwardly extending from said floor 225. The construction 130 is closed by a ceiling element 235, having a hatch 240 such that the construction 130 can be opened for easy access, and can be closed. A container for the sensor means 25, the control means 30 and the communication means 35 of the effluent sump means 15 is located on top of the ceiling element 235. It shall be noted, that - although this is not shown in this figure - the sensor means 25, the control means 30 and the communication means 35 of the influent sump means 5 can be located inside the construction 130. In this case, a container does not need to be provided.

Inside of the construction 230 is an adjustable dam 245 extending from the floor 225 upwards in the direction of the ceiling element 235 and over the entire length of the sidewall 230 in transverse direction of the effluent sump means 15, such that the lower part of the effluent sump means 15 is divided in two separate spaces 250, 255. The dam 245 is located downstream of the biofiltration-water inlet means 75, which is only symbolically represented in this Fig. 7, and as can be readily understood from arrow X representing biofiltration-water flowing into the effluent sump means 15. As depicted by arrow XI, the incoming biofiltration-water can flow from the first space 250 into the second space 255, while a certain volume of biofiltration water remains in the first space 250. The water exits the effluent sump means 15 via the effluent-sump-water outlet means 85 in form of effluent-sump-water, as represented by arrow XII.

Fig. 8 is a simplified block diagram of yet another embodiment of the stormwater management system 1 according to the invention. An influent dump means 5, a space 140 and an effluent sump means 15 form a joint construction 135. A biofiltration means 10 is juxtaposed to it in a separate construction 145. Each of the influent sump means 5, the space 140, the effluent sump means 15 and the biofiltration means 10 are provided with a sensor means 25, control means 30 and communication means 35, respectively. It shall be noted that the fluid flow of the stormwater etc. corresponds to the one described in the figures before and that representation of all the before arrows as well as the design of the influent sump means 5, the space 140, the effluent sump means 15 and the biofiltration means 10 is omitted for the sake of simplicity, unless expressly stated in the following part of this description.

As already described before with reference to Fig. 1, a stormwater sewer 45 is in fluidic communication with the influent sump means 5, as represented by arrow I. The incoming stormwater is treated within the influent sump means 5 as described before and as represented by arrow III. The treated stormwater exits the influent sump means 5 in form of influent-sump-water, which is furthermore handled in the biofiltration means 10 and as represented by arrow VII. The biofiltration-water so generated enters the effluent sump means 15 and exists the effluent sump means 15 via the space 140 to the well means 95 in the direction of the well 95, as depicted by arrow XIV. To this end, at least one pipe (not shown in this Fig. 8) is installed in the space 140 and in the area outside of the space 130 up to the well means 95. The well means has a sensor means 25, a control means 30 and a communication means 35.

The well means 95 furthermore is provided with an outlet pipe 260, which is provided with a valve means 265 in downstream direction. A first pipe 270 and a second pipe 275 are connected independently from each other to the valve means 265. The valve means 265 according to this embodiment is in communication with the sensor means 25, a control means 30 and a communication means 35 of the well means 95. Downstream, the first pipe 270 is in fluid communication with a user 280 such that water from the well means 95 is available. The second pipe 275 directs water from the well means 95 through the space 140 to the biofiltration means 10 such that water from the well means 95 is available in the biofiltration means, as represented by arrows XVII and XVIII. As represented by arrow XIX, water can be re-directed from the biofiltration means 10 through the space 140 to the user 280 by means of another pipe 285.

It shall be noted that, although not shown in this figure, water from the well means 95 can alternatively be directed to the influent sump means 5 and/or the effluent sump means 15 rather than to the biofiltration means 10. Additionally, or alternatively, water from the well means 95 can be directly guided to the stormwater sewer 45 (not shown in Fig. 8).

Fig. 9 is a simplified view of a joint construction 135 which includes a space 140 between an influent sump means 5 and an effluent sump means 15, as has been described before with reference to Fig. 3. A part of a side wall 160 of the influent sump means 5, which adjacent to the space 140, and a part of the side wall 200 of the effluent sump means 15, which is adjacent to the space 140, are represented in this figure. As can be seen, there are a number of devices which are adapted to influence the fluid flow between the influent sump means 5 and the biofiltration means 15, and the effluent sump means 15 and the well means 95, respectively.

Influent-sump-water is pumped by a pump 290 into a pipe 295, which is provided with a control means 30 of the influent sump means 5 and a valve 65. In a by-pass pipe 300, a sensor 25 of the influent sump means 5 is located which is adapted to receive influent-sump-water as well. As described before, provided the quality of the influent-sump-water corresponds to the pre-set value, it can enter the biofiltration means 10 via the influent-sump-water inlet means 60, as denoted by arrow VI. Provided the quality of the influent-sump-water does not correspond to the pre-set value, the valve 65 will shut-off in line with the control means 30. The influent-sump-water can exit the tube 295 then, as represented by arrow V.

In a similar manner effluent-sump-water is pumped by a pump 305 into a pipe 310, which is provided with a control means 30 of the effluent sump means 5 and a valve 100. In a by-pass pipe 315, a sensor 25 of the effluent sump means 5 is located which is adapted to receive effluent-sump-water as well. As described before, provided the quality of the effluent-sump-water corresponds to the pre-set value, it can enter the well means 95 as denoted by arrow XIV. Provided the quality of the effluent-sump-water does not correspond to the pre-set value, the valve 100 will shut-off in line with the control means 30. The effluent-sump-water can exit the tube 310 then, as represented by arrow XIII.

It will be appreciated that all the aforementioned pipes, pumps, sensor means and control means are located in the space 140. As such, they are easily accessible. Also any communication means 35 (not shown here) can be provided in the space 140.

It shall be noted that the stormwater management system 1 can include piping, a number of valves and a number of pumps to enable the fluid flow of the stormwater from the stormwater sewer 45 up to the well means 95 and the user 280, respectively, which are not shown in the Figures 1 to 8 for the sake of simplicity.

It shall furthermore be noted that the number, position and kind of sensor means 25, control means 30 and communication means 35 can deviate from the ones shown in Figures 1 to 8, respectively. For instance, the number of sensor means 25 can be, in particular significantly, higher than the number of control means 30 or communication means 35. In particular, only one control means 30 or one communication means 35 can be provided, which are in operative connection with a high number of sensor means 25.

By way of example, the sensor means 25 of the influent sump means 5 can include a water level sensor and/or a water quality sensor, which is adapted to sense the presence of oils, hydrocarbons, the electrical conductivity or the turbidity of the water. The sensor means 25 of the biofiltration means 10 can include an overflow sensor or a water quality sensor. The sensor means of the effluent sump means 15 can include a water level sensor and/or a water quality sensor, which is adapted to sense for example pH and nutrients of the water. Finally, any one of the sensor means 25 can include a temperature sensor which is adapted to measure the water temperature and/or the air temperature.

Also by way of example, the control means 30 of influent sump means 5, the biofiltration means 10 and/or the effluent sump means 15 can be adapted to control the level, the volume, the flow, the turbidity, the time, the electrical conductivity of the water and/or the amount of dissolved oxygen upstream of the control means 30 of influent sump means 5, the biofiltration means 10 and/or the effluent sump means 15, within the control means 30 of influent sump means 5, the biofiltration means 10 and/or the effluent sump means 15, and/or downstream of the control means 30 of influent sump means 5, the biofiltration means 10 and/or the effluent sump means 15.

### Reference signs:

| | | | |
|---|---|---|---|
| 1 | stormwater management system | 5 | influent sump means |
| 10 | biofiltration means | 15 | effluent sump means |
| 20 | filtration means | 25 | sensor means |
| 30 | control means | 35 | communication means |
| 40 | stormwater inlet means | 45 | stormwater source |
| 50 | valve means | 55 | influent-sump-water outlet means |
| 60 | influent-sump-water inlet means | 65 | valve means |
| 70 | biofiltration-water outlet means | 75 | biofiltration-water inlet means |
| 80 | valve means | 85 | effluent-sump-water outlet means |
| 90 | effluent-sump-water inlet means | 95 | well means |
| 100 | valve means | 105 | reservoir |
| 110 | stormwater inlet means | 115 | stormwater outlet means |
| 120 | valve means | 123 | reservoir |
| 124 | valve means | 125 | construction |
| 130 | construction | 135 | construction |
| 137 | hatch | 138 | ceiling |
| 140 | space | 145 | construction |
| 150 | aerator | 155 | floor |
| 160 | sidewalls | 165 | ceiling element |
| 170 | hatch | 175 | first baffle |
| 176 | space | 177 | space |
| 180 | screen | 185 | handle |
| 190 | second baffle | 195 | floor |
| 200 | sidewall | 205 | support |
| 210 | support | 215 | inlet pipe |
| 220 | outlet pipe | 225 | floor |
| 230 | sidewalls | 235 | ceiling element |
| 240 | hatch | 245 | dam |
| 250 | space | 255 | space |
| 260 | outlet pipe | 265 | valve means |
| 270 | first pipe | 275 | second pipe |
| 280 | user | 285 | pipe |
| 290 | pump | 295 | pipe |
| 300 | by-pass pipe | 305 | pump |
| 310 | pipe | 315 | by-pass pipe |
| I | Fluidic communication | II | Fluidic communication |
| III | Fluidic communication | IV | Fluidic communication |
| V | Fluidic communication | VI | Fluidic communication |
| VII | Fluidic communication | VIII | Fluidic communication |
| IX | Fluidic communication | X | Fluidic communication |
| XI | Fluidic communication | XII | Fluidic communication |
| XIII | Fluidic communication | XIV | Fluidic communication |
| XV | Fluidic communication | X | Fluidic communication |
| XI | Fluidic communication | XII | Fluidic communication |
| XIII | Fluidic communication | XIV | Fluidic communication |
| XV | Fluidic communication | XVI | Fluidic communication |
| XVII | Fluidic communication | XVIII | Fluidic communication |
| XIX | Fluidic communication | | |
| LA | Longitudinal axis | | |
| L1 | layer of filter material | | |
| L2 | layer of filter material | | |
| L3 | layer of filter material | | |

## Claims

1. Stormwater management system (1), adapted to be in fluidic communication between at least one stormwater source (45) and at least one well means (95), having
1.1 a filtration means (20), having
1.1.1 at least one stormwater inlet means (40), which is adapted to receive stormwater from the stormwater source (45),
1.1.2 at least one influent sump means (5), which is adapted to receive stormwater from the stormwater inlet means (40), to physically and/or chemically treat the stormwater and to output influent-sump-water downstream of the stormwater inlet means (40),
1.1.3 a biofiltration means (10), which is adapted to receive at least part of the influent-sump-water from the influent sump (5) means, to physically and/or chemically treat the influent-sump-water and to output biofiltration-water downstream of the influent sump means (5),
1.1.4 at least one effluent sump means (15), which is located in the same construction (135) as the influent sump means (5) and which is adapted to receive at least part of the biofiltration-water from the biofiltration means (10) to physically and/or chemically treat the biofiltration-water and to output effluent-sump-water downstream of the effluent sump means (15) to the well means (95), and
1.2 at least one sensor means (25), adapted to sense at least a physical and/or chemical property of and/or in the stormwater, the influent-sump-water, the biofiltration-water, the effluent-sump-water, the stormwater inlet means (40), the influent sump means (5), the biofiltration means (10), and/or the effluent sump means (15), and/or
1.3 at least one control means (30), adapted to control at least a physical and/or chemical property of and/or in the stormwater, the influent-sump-water, the biofiltration-water, the effluent-sump-water, the stormwater inlet means (40), the influent sump means (5), the biofiltration means (10), and/or the effluent sump means (15), and/or
1.4 at least one communication means (35) to receive and/or send data representing at least a physical and/or chemical property of and/or in the stormwater, the influent-sump-water, the biofiltration-water, the effluent-sump-water, the stormwater inlet means (40), the influent sump means (5), the biofiltration means (10), and/or the effluent sump means (15).

2. Stormwater management system (1) according to claim 1, **characterised in that** at least one particle settling means (175, 190) and/or particle removal means (185) is located in the influent sump means (5) and/or the effluent sump means (15).

3. Stormwater management system (1) according to claim 2, **characterised in that** the particle settling means (175, 190) and/or the particle removal means (185) has at least one depressed channel and/or at least one mesh, adapted to receive particles from water within the influent sump means (5) and/or the effluent sump means (15), respectively.

4. Stormwater management system (1) according to claim 3, **characterised in that** the particle settling means (175, 190) and/or the particle removal means (185) has at least one cleaning means, adapted to remove particles from the particle settling means (175, 190) and/or the particle removal means (185).

5. Stormwater management system (1) according to any one of the preceding claims, **characterised in that** the influent sump means (5), the biofiltration means (10) and the effluent sump means (15) are located in the same construction (145).

6. Stormwater management system (1) according to any of the precedent claims, **characterised in that** the at least one sensor means (25), the at least one control means (30) and/or the at least one communication means (35) are located in the same construction (125).

7. Stormwater management system (1) according to any one of the preceding claims, **characterised by** at least one aerator means (150) and/or at least one oil separation means which is located in the influent sump means (5) and/or the biofiltration means (10) and/or the effluent sump means (15).

8. Stormwater management system (1) according to any one of the preceding claims, **characterised by** at least one reservoir (105) which is in fluidic communication between the stormwater source (45) and the stormwater inlet means (40).

9. Stormwater management system (1) according to any one of the preceding claims, **characterised by** at least one valve (65, 100), which is adapted to at least temporarily allow for, by-pass and/or shut-off flow of at least part of the stormwater, part of the influent-sump-water, part of the biofiltration-water, part of the effluent sump-water and/or other water which is adapted to enter, flow within and/or exit the stormwater management system (1).

10. Stormwater management system (1) according to claim 9, **characterised in that** the at least one valve (65, 100), the at least one sensor means (25), the at least one control means (30) and/or the at least one communication means (35) are located in the same construction (125).

11. Stormwater management system (1) according to claim 10, **characterised in that** the at least one valve (65, 100), the at least one sensor means (25), the at least one control means (30) and/or the at least one communication means (35) are located in a space (140) between and outside of the influent sump means (5) and the effluent sump means (15).

12. Stormwater management system (1) according to any one of the preceding claims, **characterised by** at least one well means (95) which is in fluidic communication with the effluent sump means (15).

13. Stormwater management system (1) according to any one of the preceding claims, **characterised in that** the well means (95) is adapted to output water to the filtration means (20), in particular to the biofiltration means (10), and/or to a water user means (280) and/or to the stormwater source (45).
